# EUROPEAN PATENT APPLICATION

(11) **EP 1 345 416 A1**
(43) Date of publication of application: **17.09.2003**
(21) Application number: 02251823.7
(22) Date of filing: 14.03.2002
(51) Int. Cl.: H04N 5/00

(54) **Method and digital television unit for operating broadcast applications**

(71) Applicant: Sony Service Center (Europe) N.V., 1840 Londerzeel (BE)
(72) Inventor: Zivotic, Predrag, 1050 Brussels (BE); Blagojevic, Vladimir, 1040 Brussels (BE)
(74) Representative: Ayers, Martyn Lewis Stanley

(57) **Abstract**

A method and digital television unit for operating broadcast applications and resident applications together on a digital television unit, the broadcast applications being downloaded from a broadcast stream, wherein, upon selection of a resident application, the remaining memory capacity of the digital television unit is detected and, where the detected remaining memory capacity is insufficient for running the selected resident application, in turn, for each loaded broadcast application until the detected remaining memory capacity is sufficient for running the selected resident application, the state of a loaded broadcast application is changed and the remaining memory capacity is detected again.

## Description

The present invention relates to a method and digital television unit for operating broadcast applications, in particular for operating broadcast applications and resident applications together in a digital television unit.

Digital television equipment is now well known and various digital television units are available, for instance integrated digital television receivers and set top boxes for use with television displays. There are also various standards, such as DVB, governing broadcast of digital television services.

It has been proposed to provide broadcast applications within the broadcast stream and various standards, such as MHP, exist to govern the broadcast of these applications. A broadcast application may be downloaded by a television unit. The broadcast application can then be auto started or activated by a user and run so as to provide from the broadcaster additional services and functionality to the user.

The present invention is based on the recognition that the broadcast applications could be operated in a television unit having its own resident applications and could make use of resources available in the television unit. In other words, by using resident applications, the functionality of the television unit can be created by operating applications which are resident in the television unit. At the most basic level, these applications might merely allow volume, brightness, contrast, etc to be adjusted and provide the user with a graphic display on the television screen. However, the present application is particularly concerned with more sophisticated resident applications, for instance providing an electronic program guide (EPG), a channel index or channel information.

The present invention is based particularly on a recognition of the problems of broadcast applications using the memory resources of a digital television unit and, thereby, preventing operation of resident applications.

According to the present invention, there is provided a method of operating broadcast applications and resident applications together on a digital television unit, the broadcast applications being downloaded from a broadcast stream, the method including:
upon selection of a resident application, detecting the remaining memory capacity of the digital television unit; and
where the detected remaining memory capacity is insufficient for running the selected resident application, in turn, for each loaded broadcast application until the detected remaining memory capacity is sufficient for running the selected resident application, changing the state of a loaded broadcast application and detecting again the remaining memory capacity.

According to the present invention, there is also provided a digital television unit for operating broadcast applications and resident applications together on a common platform, the broadcast applications being downloaded from a broadcast stream, the unit including memory resources for use by the broadcast and resident applications;
a detector, for detecting, upon selection of a resident application, the remaining memory capacity of the memory resources; and
a processor for changing, where the detected remaining memory capacity is insufficient for running the selected resident application, the state of each loaded broadcast application in turn until the detected remaining memory capacity is sufficient for running the selected resident application, wherein
after the state of a loaded broadcast application is changed, the detector again detects the remaining memory capacity.

In this way, it is always ensured that the resident applications can run in the digital television unit and provide the functionality intended by the manufacturer.

Preferably, in changing the state of a broadcast application, it is ensured that the broadcast application is at least paused. In other words, if the broadcast application is already paused, the next broadcast application can be considered, but if it is not, then it is forced to a paused state.

In this way, the digital television unit may first pause any active running broadcast applications successively until there is enough memory to allow the resident application to operate. This minimises the change to the broadcast applications chosen and running under the command of the user.

When changing the state of a broadcast application, the broadcast application may also be terminated.

Preferably, changing the state of a broadcast application includes pausing the broadcast application when active and, if all loaded broadcast applications are paused, terminating the broadcast application.

In other words, active broadcast applications are considered first and the active broadcast applications are paused in turn until the detected remaining memory capacity is sufficient. However, if all of the loaded broadcast applications are paused and the detected remaining memory capacity is still insufficient, then all of the remaining broadcast applications are terminated in turn until the detected remaining memory capacity is sufficient.

In this way, the effect on broadcast applications selected and used by the user is minimised.

Preferably, in the absence of any contrary indication of order, broadcast applications which have merely been loaded are terminated before paused broadcast applications.

Thus, where a loaded but still unused broadcast application is present together with a paused broadcast application, the merely loaded broadcast application is terminated first, since this should be of less consequence to the user.

Broadcast applications may be provided in a broadcast stream with priority information regarding their relative priority. In this case, the priority information is preferably downloaded and the loaded broadcast applications have their states changed in their order of priority, lowest priority first.

Hence, when ensuring that broadcast applications are paused, each broadcast application is considered in turn according to priority and broadcast applications which are active are paused. Similarly, when broadcast applications are terminated in turn, the paused and merely downloaded broadcast applications are considered in their order of priority and terminated in this order.

Preferably, where a broadcast application is not provided with priority information, a predetermined priority is assigned to it.

This simplifies operation of the system and ensures that all broadcast applications are considered in the same manner.

Preferably, an ordered list of all loaded broadcast applications is constructed, the list being ordered according to the relative priority of the broadcast applications.

This allows the state of broadcast applications to be changed in turn merely by reference to the list.

Preferably, the ordered list is constructed with broadcast applications with the same priority being ordered according to whether the broadcast application is active, paused or merely loaded such that, for broadcast applications of the same priority, the state of each broadcast application is changed first for broadcast applications which are merely loaded, then broadcast applications which are paused and finally broadcast applications which are active.

Once again, this minimises the effect of the process on broadcast applications being used by the user.

Preferably, garbage collection is forced before each detection of the remaining memory capacity.

It may be that, although an application has been terminated or paused, there are still parts of the memory which have not been cleared. Forcing garbage collection ensures that the state of a broadcast application is not changed unnecessarily.

The broadcast applications preferably conform to a known standard such as MHP.

It will be appreciated that the present invention can be embodied in software, and, hence, provided as a computer program or as a computer program product having computer codes stored on a computer readable medium.

The invention will be more clearly understood from the following description, given by way of example only, with reference to the accompanying drawings, in which:
Figure 1 illustrates a television unit in the form of a set top box;
Figure 2 illustrates a television unit in the form of an integrated receiver;
Figure 3 illustrates schematically the basic functionality of the television unit.
Figure 4 illustrates states of a broadcast application;
Figure 5 illustrates a process according to the present invention;
Figure 6 illustrates an alternative process according to the present invention; and
Figures 7(a) to (c) illustrate schematically the states of broadcast applications during the process of Figure 6.

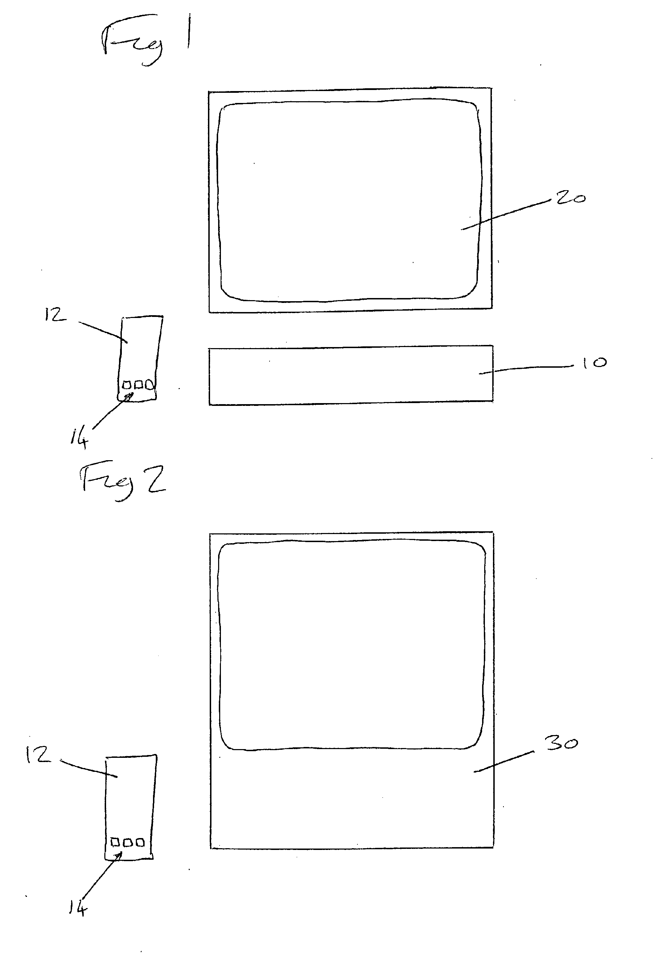

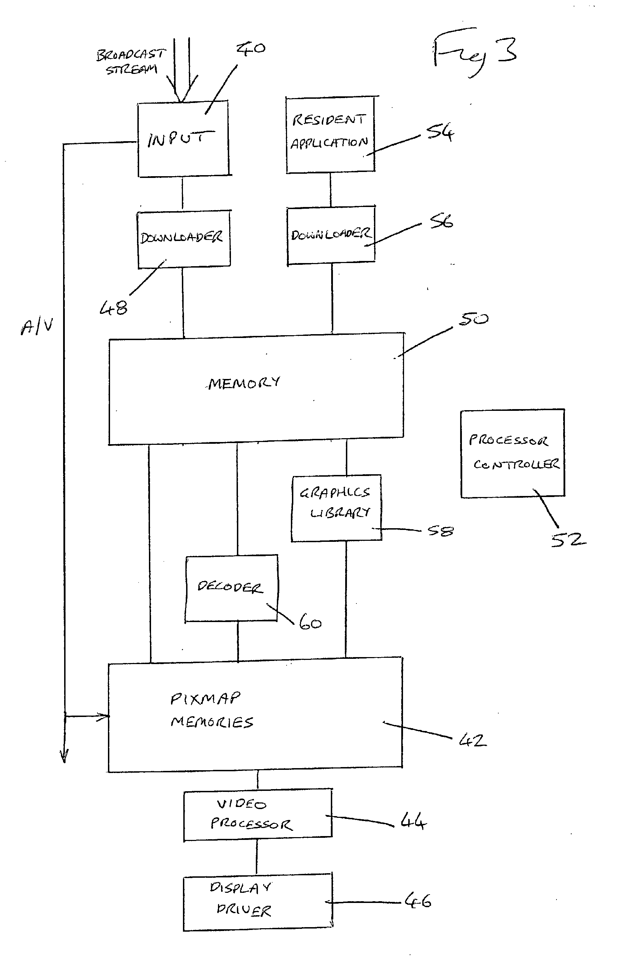

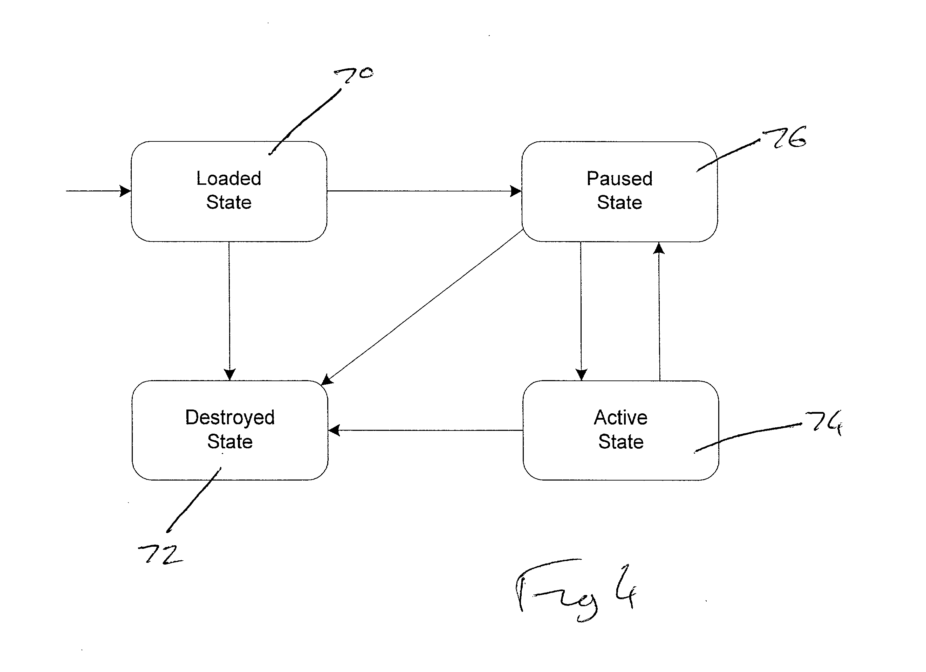

The present application is concerned with digital television units of any type. For instance, as illustrated in Figure 1, the digital television unit may be a set top box 10 in association with a television display 20. Alternatively, as illustrated in Figure 2, the television unit may be an integrated digital receiver 30. In either case, a user input is provided so as to enable the user to control the various functions of the television unit. As illustrated, a remote control 12 is provided with a number of control keys 14.

The television unit 10,30 is able to operate broadcast applications which have been provided in a broadcast stream in accordance with a predetermined standard such as MHP. Resident applications are also provided in the television unit by the manufacturer to provide the functionality of the television unit as intended by the manufacturer.

A resident application is an application which is provided by the manufacturer and installed at production time. A typical resident application allows the end-user to change settings of the digital receiver or enables the end-user to tune to another service. In normal mode, a resident application typically runs in background mode without being visible and is activated by a specific set of remote control keys (system keys). Upon receiving a key from this set, it becomes active (resident mode) and may become visible, may hide or resize video, waiting for more end-user input. The concept of resident applications covers all the visible and non-visible applications embedded in the STB/DTV, e.g.: an EPG, a Setup Tool, the process running when TV is in stand-by mode, the clock etc.

A broadcast application is an application being broadcast on a specific (set of) service(s) at a specific time. An example of a broadcast application is an Electronic Program Guide (EPG). Broadcast applications can startup automatically after a channel change. Broadcast applications too can resize the video, rendering (part of the) the background plane visible to the end-user. Broadcast applications are downloaded from the input signal in the same way as video or audio signals.

Both applications have access to a common set of components provided on the STB/DTV (the core stack), e.g.: graphics, tuner, remote control keys, flash memory, disk etc.

These applications could run in Java, but this is not essential. Nevertheless, it should be appreciated that the overall system is software based, preferably taking the form of objects and classes which make use of various resources.

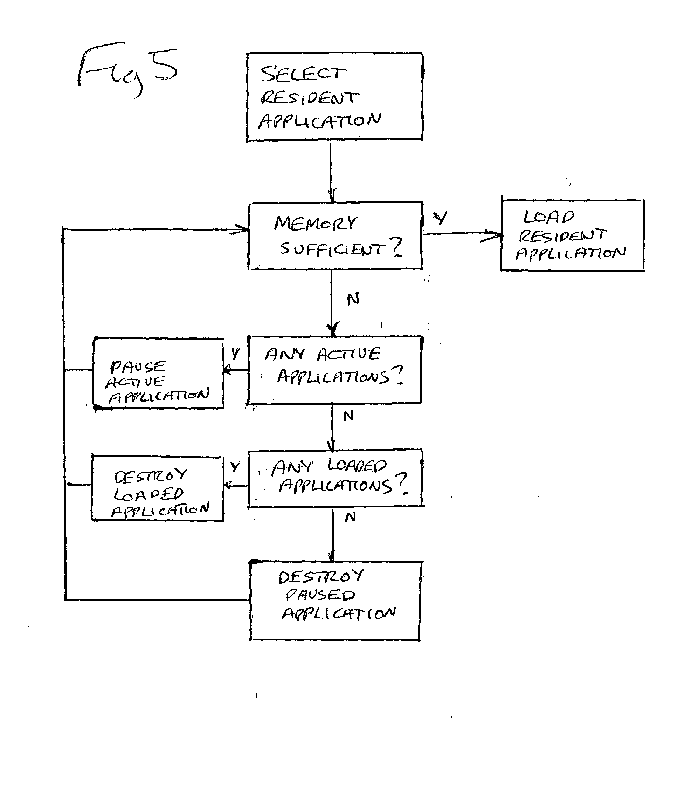

Figure 3 illustrates schematically the functionality of the television unit. The various features of this figure are provided to give an illustration of the functioning of the overall system and are not intended to provide a direct representation of the actual software objects used to operate the system.

A broadcast stream is provided at input 40. This may be derived from any suitable source, such as terrestrial, satellite or cable transmission. The input 40 includes appropriate features, either in software or hardware, for distinguishing various parts of the broadcast stream and separating the data as required. Hence, the audio/video (A/V) of the particular television channel chosen by the user is separated and provided for display. In particular, the video data is written to a pixel map 42. This includes the pixel data for a complete field or frame and is then read out by a video processor 44 and provided to a display driver 46.

Broadcast applications may also be separated in the input 40 and downloaded by a downloader 48 to the television unit. Figure 3 illustrates download as a downloader block 48, though in software terms, an instance of a class loader may be provided for each downloaded broadcast application.

Once downloaded, broadcast applications are stored in the television unit, for instance in a memory 50.

As illustrated in Figure 3, a processor controller 52 is provided. The processor controller 52 controls all of the various parts of the functionality illustrated in Figure 3. In the television unit, there will be various hardware components such as a CPU, but the functionality of the processor controller 52 will usually be implemented in software. The processor controller 52 is responsive to user input, for instance from the remote control 12, to control operation of the television unit.

Thus, the processor controller 52 can cause download of a particular broadcast application according to the input of the user and then operate the television unit in accordance with the downloaded broadcast application.

It is proposed that the internal functionality of the television unit also be achieved in software and, hence, one or more resident applications 54 are also provided. These are stored in memory and loaded 56, for instance with a system class loader, when required.

Broadcast applications are loaded on-demand, by a class loader, from the stream. On the other hand, system applications are loaded on-demand, by a system class loader, from a persistent storage medium (Flash). Thus, a class loader is created when a broadcast application is requested (loaded) and destroyed when the application exits, while the system class loader has the same lifetime as the receiver.

As a consequence, two successive loads of the same broadcast application will not result in a gain of speed; while in case of system application, loaded classes are kept in cache so that a second load of the application, should be a little bit faster.

The control keys 14 may include dedicated keys, activation of which cause operation of the corresponding resident application.

The present application is particularly concerned with broadcast applications consuming memory resources such that there are insufficient left for operation of the resident application selected by the user. Thus, upon selecting a resident application 54, using for instance the control keys 14 of the remote control 12, there may be insufficient memory 50 for the downloader 56 to download or at least run the resident application.

It is now proposed, in these circumstances, to change successively the states of the broadcast applications until there is sufficient memory for the resident application. This ensures that the functionality of the digital television unit intended by the manufacture can be provided irrespective of what broadcast applications are downloaded.

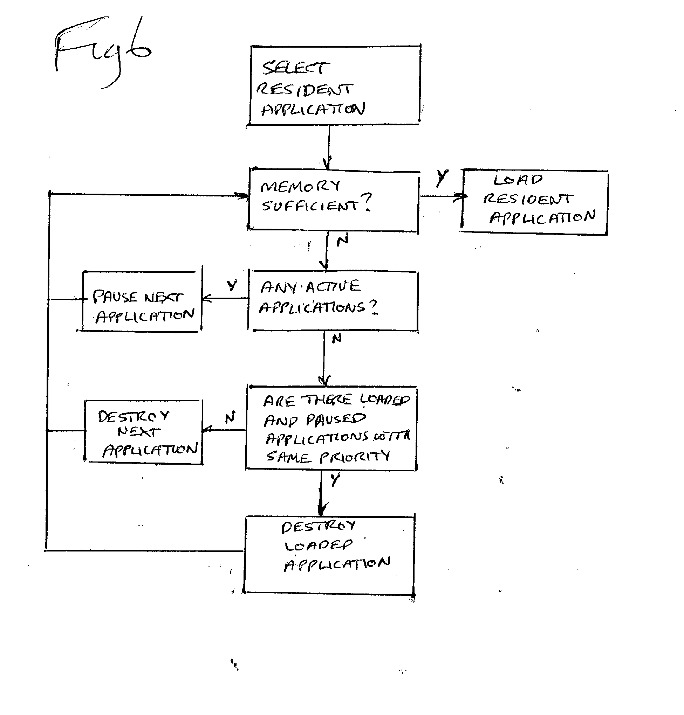

Figure 4 illustrates the states available to a broadcast application.

When first downloaded by the downloader 48, a broadcast application is merely in the loaded state 70. The application has been loaded from the broadcast stream and, at this point, the application does not do much or no initialising at all. Indeed, the application may remain in this state until a user activates it in some way. However, if anything goes wrong, the application may automatically revert to a destroyed or terminated state 72.

Once activated, the broadcast application moves to the active state 74, functions normally and provides service.

From this state, the application may be terminated and moved to the destroyed state, thereby releasing all of its resources. Alternatively, it is also possible to pause the application such that it moves to the paused state 76. In this state, the application is initialised and quiescent. It is not supposed to hold or use any resources. The application can be returned to the active state, returning to the stage of the application at which it left, or can be terminated so as to move to the destroyed state 72.

In terms of memory usage, it is clear that, in general, a broadcast application uses most memory in its active state, less in its paused state, still less in its loaded state, and, usually, none in its destroyed state. Thus, it is proposed to change the state of loaded broadcast applications so as to free memory resources for use by a selected resident application.

When broadcast applications are loaded, a list of those applications may be prepared, usually by way of pointers to the application life cycle managers. For standards such as MHP, application ID's are provided in the broadcast stream and the list may be provided merely in order of application ID.

By considering each broadcast application in turn, it is possible to change successively the state of the broadcast applications to states requiring less memory and hence free memory for use by the selected resident application. Thus, active broadcast applications can be paused or terminated and paused and loaded applications can be terminated.

In order to provide the required memory for the selected resident application, it is not essential which state changes are made first. However, it is noted that paused and active broadcast applications are in use by the user and should, therefore, preferably not be destroyed. It is proposed, therefore, that the first step should be to pause any active broadcast applications.

In this way, no applications are lost from the digital television unit and applications are merely paused while the selected resident application operates.

Thus, when it is found that there is insufficient memory for a selected resident application, the system, by means of the processor controller 52, successively pauses active broadcast applications and checks the remaining memory capacity until there is sufficient memory to load and operate the selected resident application.

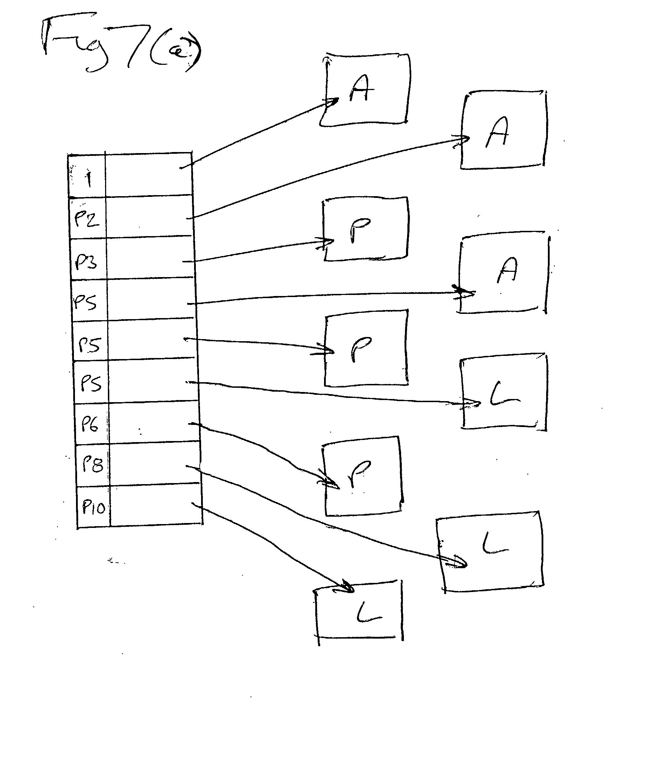

Of course, it is possible that all active broadcast applications will be paused and there will still be insufficient memory for the selected resident application. As will be discussed below, it is possible for the various broadcast applications to be prioritised. However, in the absence of any priorities, it is noted that any paused broadcast applications, whether previously active or not, were to some extent being used by the user. In contrast, the merely loaded applications had never been used. Therefore, the process successively destroys loaded applications and then paused applications until there is sufficient memory for the selected resident application. This process is illustrated schematically in Figure 5.

The process can be refined by forcing garbage collection each time before the remaining memory is checked. This ensures that, where an application has been terminated or paused, all of the associated memory has been cleared before the memory check:

It is to be noted that standards for broadcast applications allow the broadcast applications to be given relative priorities. In particular, a priority is assigned to a broadcast application by the broadcaster and determines the relative rights of the application in using resources of the receiver. For example, when there is more than one application with the same application identification, the priority can be used to determine which application is started. Similarly, where there are insufficient resources to continue running a setup application, this priority can be used to determine which applications to stop or pause.

The process described above and illustrated in Figure 5 can be refined further by taking account of the assigned priorities.

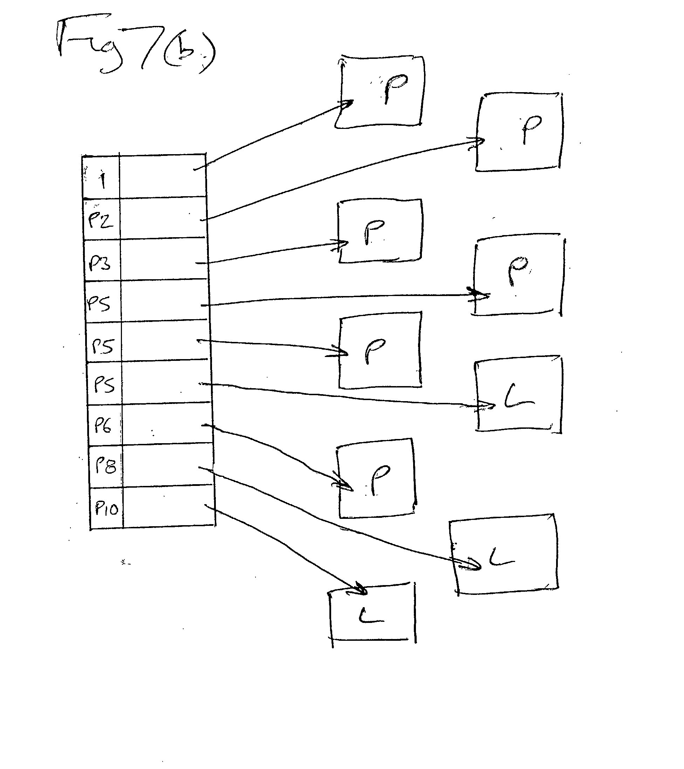

In particular, as illustrated in Figure 6, when active applications are paused, they are paused in their order or priority.

It would be possible then to terminate all loaded applications in their order of priority followed by all paused applications in their order of priority. However, in the preferred process as illustrated in Figure 6, once all of the active applications have been paused, the process first determines whether or not there are loaded and paused applications with the same priority. If so, then the loaded applications are terminated or destroyed first.

In this way, applications are destroyed in order of priority, but where priority does not distinguish between loaded and paused applications, the loaded but unused applications are destroyed first.

As with the process in Figure 5, this can be refined by forcing garbage collection each time before checking the remaining memory.

As a preferred way of implementing this system, when broadcast applications are downloaded by downloader 48, the processor controller 52 constructs a list of all of the loaded broadcast applications in order of their relative priority. Preferably, this list is a list of pointers or addresses for the respective application managers.

When a resident application is selected and it is found that there is insufficient memory, the list is constructed in order of priority. However, in addition, for applications having the same priority, the list orders the applications such that loaded, then paused and finally active applications will have their states changed.

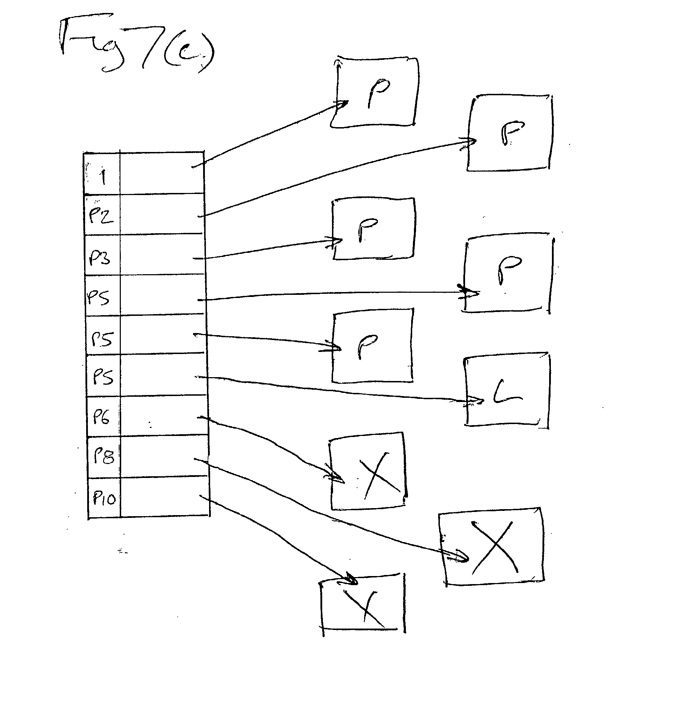

Figures 7(a) to (c) illustrate schematically a list together with pointers to the application managers.

Figures 7(a) illustrates the list when first created.

The states of the applications are then changed in turn starting from the lowest priority P10 and working to the highest priority P 1. Thus, first of all, each of the active applications are paused in turn. If this does not result in enough memory for the selected resident application, this will result in the states illustrated in Figure 7(b).

Next, again in the order of the list, the applications will be terminated or destroyed. In this respect, the applications having priorities P10, P8 and P6 will be destroyed in turn as illustrated by Figure 7(c). However, it will then be noted that there are three applications all having priority P5.

As explained with reference to Figure 6, in this circumstance, it is preferred to destroy an application which is merely loaded before destroying a paused application. However, referring again to Figure 7(a), it will be seen that, by ordering the list with loaded applications at a lower point than paused and active applications, destroying applications in order of the list will naturally result in loaded applications being destroyed before paused applications.

Hence, construction of the list results in an effective and efficient way of changing the states of the applications appropriately.

According to this procedure, it is guaranteed that resident applications, which may be considered as integral parts of the digital television unit, will always have sufficient memory to run.

Digital television units currently have relatively small amounts of memory making the process of the present invention particularly important. However, even as available memory increases, it is inevitable that broadcasters will produce broadcast applications which are more and more complex and make use of the additional memory available. Hence, it will still be necessary to guarantee availability of memory to resident applications.

## Claims

1. A method of operating broadcast applications and resident applications together on a digital television unit, the broadcast applications being downloaded from a broadcast stream, the method including:
upon selection of a resident application, detecting the remaining memory capacity of the digital television unit; and
where the detected remaining memory capacity is insufficient for running the selected resident application, in turn, for each loaded broadcast application until the detected remaining memory capacity is sufficient for running the selected resident application, changing the state of a loaded broadcast application and detecting again the remaining memory capacity.

2. A method according to claim 1 wherein the step of changing the state of a broadcast application includes pausing that the broadcast application when active.

3. A method according to claim 1 or 2 wherein the step of changing the state of a broadcast application includes terminating the broadcast application.

4. A method according to claim 2 or 3 wherein, the step of changing the state of a broadcast application includes pausing the broadcast application when active and, if all loaded broadcast applications are paused, the step of changing the state of a broadcast application includes terminating the broadcast application.

5. A method according to claim 3 or 4 wherein, in the absence of a contrary indication of order, the step of terminating is conducted for broadcast applications which have merely been loaded before paused broadcast applications.

6. A method according to any preceding claim further including:
where broadcast applications in a broadcast stream are provided with priority information regarding relative priority, downloading the priority information; and
conducting the step of changing the state of each loaded broadcast application in order of priority, lowest priority first.

7. A method according to claim 6 further including:
where a broadcast application is not provided with priority information, assigning to it a predetermined priority.

8. A method according to claim 6 or 7 further including:
constructing an ordered list of all loaded broadcast applications, the list being ordered according to the relative priority of the broadcast applications.

9. A method according to claim 8 further including:
constructing the ordered list with broadcast applications of the same priority being ordered according to whether the broadcast application is active, paused or merely loaded such that, for broadcast applications of the same priority, the step of changing the state of each loaded broadcast application is conducted first on broadcast applications which are merely loaded, then broadcast applications which are paused and finally broadcast applications which are active.

10. A method according to any preceding claim further including:
forcing garbage collection before each detection of the remaining memory capacity.

11. A digital television unit for operating broadcast applications and resident applications together on a common platform, the broadcast applications being downloaded from a broadcast stream, the unit including memory resources for use by the broadcast and resident applications;
a detector, for detecting, upon selection of a resident application, the remaining memory capacity of the memory resources; and
a processor for changing, where the detected remaining memory capacity is insufficient for running the selected resident application, the state of each loaded broadcast application in turn until the detected remaining memory capacity is sufficient for running the selected resident application, wherein
after the state of a loaded broadcast application is changed, the detector again detects the remaining memory capacity.

12. A digital television unit according to claim 11 wherein, when the processor changes the state of a broadcast application, the processor pauses the broadcast application when active.

13. A digital television unit according to claim 11 or 12 wherein the processor is for terminating broadcast applications.

14. A digital television unit according to claim 12 or 13 wherein, if all loaded broadcast applications are paused, when changing the state of a broadcast application, the processor terminates the broadcast application.

15. A digital television unit according to claim 13 or 14 wherein, in the absence of a contrary indication of order, the processor terminates broadcast applications which have merely been loaded before terminating paused broadcast applications.

16. A digital television unit according to any one of claims 11 to 15 further including:
a downloader for downloading priority information regarding relative priority of broadcast applications broadcast in a broadcast stream; wherein
the processor changes the state of each loaded broadcast application in order of priority, lowest priority first.

17. A digital television unit according to claim 16 wherein, where a broadcast is not provided with priority application, the processor assigns to it a predetermined priority.

18. A digital television unit according to claim 16 or 17 further including:
a memory for storing an ordered list of all loaded broadcast applications, the list being ordered according to the relative priority of the broadcast applications.

19. A digital television unit according to claim 18 wherein, the processor constructs the ordered list with broadcast applications of the same priority being ordered according to whether the broadcast application is active, paused or merely loaded and, for broadcast applications of the same priority, changes the state of broadcast applications which are merely loaded, then broadcast applications which are paused and finally broadcast applications which are active.

20. A digital television unit according to any one of claims 11 to 19 wherein, the processor initiates garbage collection before each detection of the remaining memory capacity.

21. A digital television unit for operating broadcast applications and resident applications together on a common platform, the broadcast applications being downloaded on a broadcast stream and the unit including memory resources for use by the broadcast and resident applications, the unit being configured to operate according to any one of claims 1 to 10.

22. A method according to any one of claims 1 to 10 or a digital television unit according to any one of claims 11 to 21, for use with broadcast applications conforming to the MHP standard.

23. A computer program comprising program code means for performing all steps of any one of claims 1 to 10 and 22 when said program is run on the computer.

24. A computer program product comprising program code means stored on a computer readable medium for performing the method of any one of claims 1 to 10 and 22 when said program product is run on a computer.
